# EUROPEAN PATENT APPLICATION

(11) **EP 1 455 282 A1**
(43) Date of publication of application: **08.09.2004**
(21) Application number: 03290531.7
(22) Date of filing: 06.03.2003
(51) Int. Cl.: G06F 17/30

(54) **Markup language extension enabling speech recognition for controlling an application**

(71) Applicant: ALCATEL, 75008 Paris (FR)
(72) Inventor: Sienel Jürgen, 71229 Leonberg (DE)
(74) Representative: Rausch, Gabriele, Dr.

(57) **Abstract**

The invention relates to a computer software product for a multimodal application comprising natural language voice recognition, where a markup language is used to integrate a voice application and where a markup language extension is used for external controlling of a voice recognizer, and where the markup language extension comprises tags comprising a symbol- or meta-symbol-attributed natural-language-understanding description for internal controlling of the voice recognizer, where the attributes comprising descriptions controlling the behavior of the outside multimodal application. The invention further relates to a markup language extension, an application interaction system, a multimodal application, a browser software, and a telecommunication device.

## Description

The present invention relates to computer software product for a multimodal application comprising natural language voice recognition. More particularly, the present invention relates to a computer software product, a markup language extension, an application interaction system, a multimodal application and a telecommunication device.

An agent-based and speech-based data navigation system is known from United States Patent Application No. 6,523,061. There a method for utilizing agents for speech-based navigation is described, comprising the steps of:
receiving a spoken request for desired information from a user; rendering an interpretation of the spoken request; constructing a navigation query based upon the interpretation; routing the navigation query to at least one agent, wherein the at least one agent utilizes the navigation query to select a portion of the electronic data source; and invoking a user interface agent for outputting the selected portion of the electronic data source to the user, wherein a facilitator manages data flow among multiple agents and
maintains a registration of each of said agents' capabilities.

The World Wide Web Consortium (W3C) has defined a multimodal interaction framework, that identifies and relates markup languages for multimodal interaction systems. The framework identifies the major components for every multimodal system, where each component represents a set of related functions. And the framework identifies the markup languages used to describe information required by components and for data flowing among components.

Components of such a multimodal interaction framework might be a user interface, a dialog manager, and an application logic.

A user who enters input into the system and observes and hears information presented by the system. An interactive multimodal implementation will use multiple input modes such as audio, speech, handwriting, or keyboarding, and other input modes. And an interactive multimodal implementation will use one or more modes of output, such as speech, text, graphics, audio files, and animation.

An interaction manager (means) coordinates the exchange for information between the human user and the application functions. It may support a variety of interaction styles including e.g. system-directed dialogs, user-directed dialogs or mixture of forms of these dialogs in which the human user and the system take turns "driving" the dialog.

The interaction manager may use inputs form the user, the session context, external knowledge sources, and disambiguation, correction, and configuration sub-dialogs to determine the user's focus and intent. Based on the user's focus and intent, the interaction manager also maintains the context and state of the application i.e. the behavior of the application like managing the composition of inputs and synchronization across modes, interfacing with business logic, and result presentation to the user.

One way to implement a strategy for determining the user's focus and intent is an interaction script. An interaction script may be expressed in languages such as Tsuneo Nitta's XISL , or languages used for the control of user interfaces such as extended HyperText Markup Language (XHTML) with Voice Profile or Speech Application Language Tags (SALT). The interaction manager may make use of context and history to interpret the inputs. In some architectures, the interaction manager may even be distributed across multiple components, utilizing coordinating events.

A recognition component captures natural input from the user and translates the input into a form useful for later processing. The recognition component may use a grammar described by a grammar markup language. An example recognition component is a speech recognizer converting spoken speech into text. Automatic speech recognition component uses an acoustic model, a language model, and/or a grammar, e.g. the W3C Speech Recognition Grammar or the Stochastic Language Model (N-Gram) Specification to convert human speech into words.

Other input recognition components may include input devices like a keyboard, designation devices like a mouse, vision, sign language, biometrics, tactile input, speaker verification, handwritten identification, and other input modes yet to be invented.

An interpretation component within the interaction manager or a recognizer might further process the results of recognition components. An interpretation component identifies the meaning or semantics intended by the user. For example, many words that users utter such as "yes", "affirmative", "sure", and "| agree", could be represented as "yes".

An integration component combines the several interpretations. Some or all of the functionality of this component could be implemented as part of the recognition, interpretation, or interaction components. For example, audiovisual speech recognition may integrate lip movement recognition and speech recognition as part of a lip reading component, as part of the speech recognition component, or integrated within a separate integration component. As another example, the two input modes of speaking and pointing are used in
"put that" (point to an object), "there" (point to a location)
and may be integrated within a separate integration component or may be integrated within the interaction manager component.

Two fundamentally different uses of multimodality may be identified:
supplementary multimodality and complementary multimodality. An application makes supplementary use of multimodality if it allows to carry every interaction (input or output) through to completion in each modality as if it was the only available modality. Such an application enables the user to select at each time the modality that is best suited to the nature of the interaction and the user's situation. Conversely, an application makes complementary use of multimodality if interactions in one modality are used to complement interactions in another. For instance, the application may visually display several options in a form and aurally prompt the user "Choose the city to fly to". Complementary use may help a particular class of users, e.g. those with dyslexia. Note that in an application supporting complementary use of different modalities each interaction may not be accessible separately in each modality. Therefore it may not be possible for the user to determine which modality to use. Instead, the document author may prescribe modalities to be used in a particular interaction.

The synchronization behavior of an application is the way in which any input in one modality is reflected in the output in another modality, as well as the way input is combined across modalities (coordination capability). The synchronization granularity specifies the level at which the application coordinates interactions. The application is said to exhibit event-level synchronization if user inputs in one modality are captured at the level of the individual domain object model (DOM) events and immediately reflected in the other modality. The application exhibits field-level synchronization if inputs in one modality are reflected in the other after the user changes focus, e.g. moves from input field to input field, or completes the interaction, e.g. completes a select in a menu. The application exhibits form-level synchronization if inputs in one modality are reflected in the other only after a particular point in the presentation is reached, e.g. after a certain number of fields have been completed in the form.

The supplementary and complementary multimodality as well as the synchronization behavior of an application is a central requirement. Synchronization of the various modalities should be seamless from the user's point of view. To elaborate, an interaction event or an external event in one modality results in a change in another; based on the synchronization granularity supported by the application. Seamlessness can encompass multiple aspect, like limited latency in the synchronization behavior with respect to what is expected by the user for the particular application and multimodal capabilities or a predictable, non-confusing multimodal behavior.

The invention targets the problem of enhancing synchronization of voice recognition and seamless multimodal behavior.

Interaction between the user and the application may often be conceptualized as a series of dialogs, managed by the interaction manager. A dialog is an interaction between the user and the application which involves turn taking. In each turn, the interaction manager (working on behalf of the application) collects input from the user, processes it (using the session context and possibly external knowledge sources) to determine , computes a response and updates the presentation for the user. An other external knowledge sources to determine the intent of the user. An interaction manager generates or updates the presentation by processing user inputs, session context and possibly interaction manager relies on strategies to determine focus and intent as well as to disambiguate, correct and confirm sub-dialogs.

The interaction manager may use inputs from the user, the session context, external knowledge sources, and disambiguation, correction, and configuration sub-dialogs to determine the user's focus and intent. Based on the user's focus and intent, the interaction manager also maintains the context and state of the application, manages the composition of inputs and synchronization across modalities, interfaces with business logic, and produces output for presentation to the user. In some architectures, the interaction manager may have distributed components, utilizing an event based mechanism for coordination.

The invention acts on the preamble of the independent computer software product claim for a multimodal application comprising natural language voice recognition, where a markup language is used to integrate a voice application and where a markup language extension is used for external controlling of a voice recognizer.

The above indicated problems are overcome by a computer software product for a multimodal application comprising natural language voice recognition, where a markup language is used to integrate a voice application and where a markup language extension is used for external controlling of a voice recognizer, where the markup language extension comprises tags comprising a symbol- or meta-symbol-attributed natural-language-understanding description for internal controlling of the voice recognizer, where the attributes comprising descriptions controlling the behavior of the (outside) multimodal application.

The above indicated problems are further overcome by markup language extension adapted for natural language voice processing in a multimodal application comprising tags comprising a grammar format natural-language-understanding description for controlling a speech recognizer, where the grammar format comprising a symbol- or meta-symbol-attributed natural-language-understanding description for internal controlling of the voice recognizer, where the attributes comprising descriptions controlling the behavior of the (outside) multimodal application.

And the above indicated problems are further overcome by an application interaction system adapted for natural language voice processing in a multimodal application, said application interaction system comprising control means for interpreting an application specified in a markup language, where a voice application is specified in a markup language extension comprising tags for external controlling of a voice recognizer, said voice recognizer comprising recognizer control means, where said recognizer control means are adapted to interpret the markup language extension comprising tags comprising a symbol- or meta-symbol-attributed natural-language-understanding description for internal controlling of the voice recognizer, where the attributes comprising descriptions for controlling the behavior of the (outside) multimodal application.

The above indicated problems are also overcome by a browser software adapted to interpret a markup language extension adapted for natural language voice processing in a multimodal application comprising tags comprising a grammar format natural-language-understanding description controlling a speech recognizer, where the grammar format comprising a symbol- or meta-symbol-attributed natural-language-understanding description for internal controlling of the voice recognizer, where the attributes comprising descriptions for controlling the behavior of the (outside) multimodal application.

And the above indicated problems are also overcome by a multimodal application comprising natural language voice recognition, said multimodal application comprising interpretation means for interpreting an markup language, said application is specified in said markup language, where a voice application is specified in a markup language extension comprising tags for external controlling of a voice recognizer, where the markup language extension comprising tags comprising a symbol- or meta-symbol-attributed natural-language-understanding description for internal controlling of the voice recognizer, where the attributes comprising descriptions for controlling the behavior of the (outside) multimodal application.

Furthermore the above indicated problems are overcome by telecommunication device comprising interpretation means adapted to interpret a markup language extension adapted for natural language voice processing in a multimodal application comprising tags comprising a grammar format natural-language-understanding description controlling a speech recognizer, where the grammar format comprising a symbol- or meta-symbol-attributed natural-language-understanding description for internal controlling of the voice recognizer, where the attributes comprising descriptions controlling the behavior of the (outside) multimodal application.

In other words the invention formalizes the semantics in terms of multimodal behavioral expressions of a recognized word or phrase, i.e. a linguistic terminal (symbol) or a linguistic non-terminal (meta-symbol) with respect to the needs of multimodal environment.

The invention relates to extension of the speech grammar format adapted to multimodal applications. Results from a speech recognizer, e.g. a parser carries beside the recognized texts, associated natural language understanding data, like instructions or meta information, which is directly linked to the words, to which they refer. The natural language understanding data is combined with the information of what to do with the next number of words or phrase, and to which multimodal element referring in a enveloping multimodal description language.

Accordingly, it is an object and advantage of the present invention to provide a markup language extension for multimodal applications that is capable of expressing tight interaction between a speech recognizer and a multimodal environment.

Another advantage of the present invention is that the user interfaces are improved drastically from end-user's point of view due to the integration of speech recognition and multimedia environment, yielding seamless (speech) reactivity and smooth behavior.

A further advantage of the present invention is that the required, artificial, and complex, domain specific, synchronization mechanisms could be now integrated in the application potion, where the synchronization request is originated, hence avoiding badly-maintainable exception mechanisms.

Yet another advantage of the present invention is that by using the invention the design of multimodal applications is greatly simplified making this technology available for a wide range of applications.

These and many other objects and advantages of the present invention will become apparent to those of ordinary skill in the art from a consideration of the drawings and ensuing description.

**Figure. 1** is a schematic drawing of a pizza order dialog according to prior art.

**Figure. 2** is a schematic drawing of a prior art multimodal application.

**Figure. 3** is a VoiceXML code fragment of the application shown in Figure 1, according to prior art.

**Figure. 4** is a schematic drawing of a multimodal application according to the invention.

**Figure. 5** is a schematic drawing of a markup language extension according to the invention.

**Figure. 6** is a code fragment of the markup language extension according to the invention.

**Figure. 7** is a telecommunication device according to the invention.

Those of ordinary skill in the art will realize that the following description of the present invention is illustrative only and is not intended to be in any way limiting.

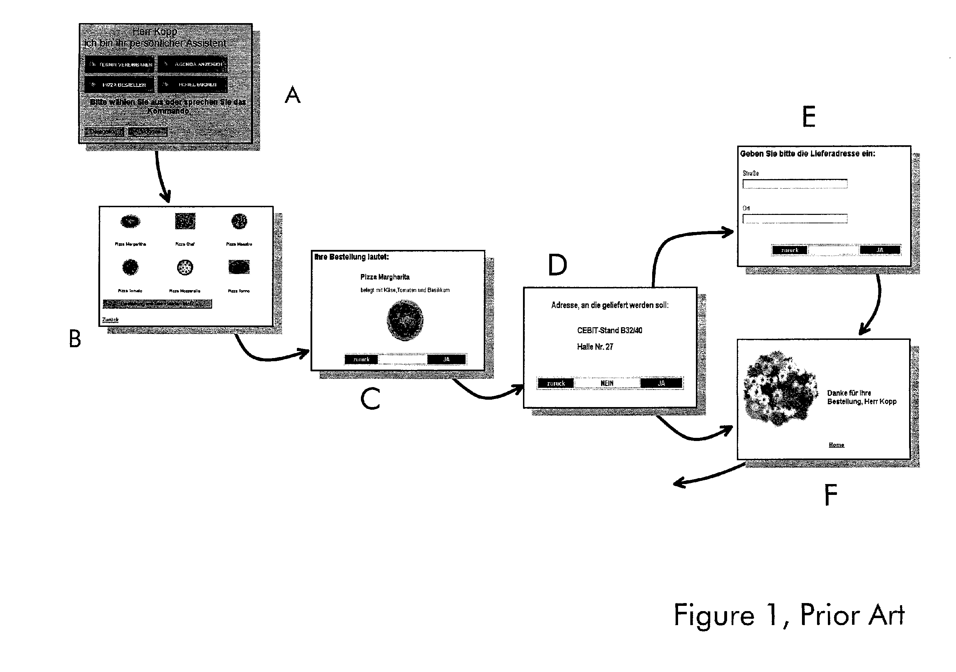

**Figure. 1** shows a pizza order dialog comprising an order form A, a choice page B, a selection confirmation page C, a address form D, a change address form E, and a final page F. There are transitions between these pages denoted by arrows. These transitions are forced by user interaction like speech, designate, type, etc.

The figure introduces the problem domain of interactive multimodal applications. A user might start from an order form A, expressing the intention to order a piazza via saying "PIZZA, please". The system reacts with the choice page B. Now the user might express the wish to order a Pizza Margarita by pointing on the picture and saying "THIS ONE, please". The application might react by the selection confirmation page C and the user confirms by saying "YES", e.g. for increasing the reliability of the order. Now the system needs the address of the user. In the shown example address form D appears. Now the user has two options either to confirm the address or to change the address. The change of the address is supported by the change address form E, where the user might type the new address. When the current address is confirmed the user is awarded with a final page F containing a thankyou.

Note that in each phase of the shown dialog unexpected things could be happen like that the user is involved in a second dialog etc. This requires a high degree of context awareness in such applications comprising multimodality or especially speech recognition.

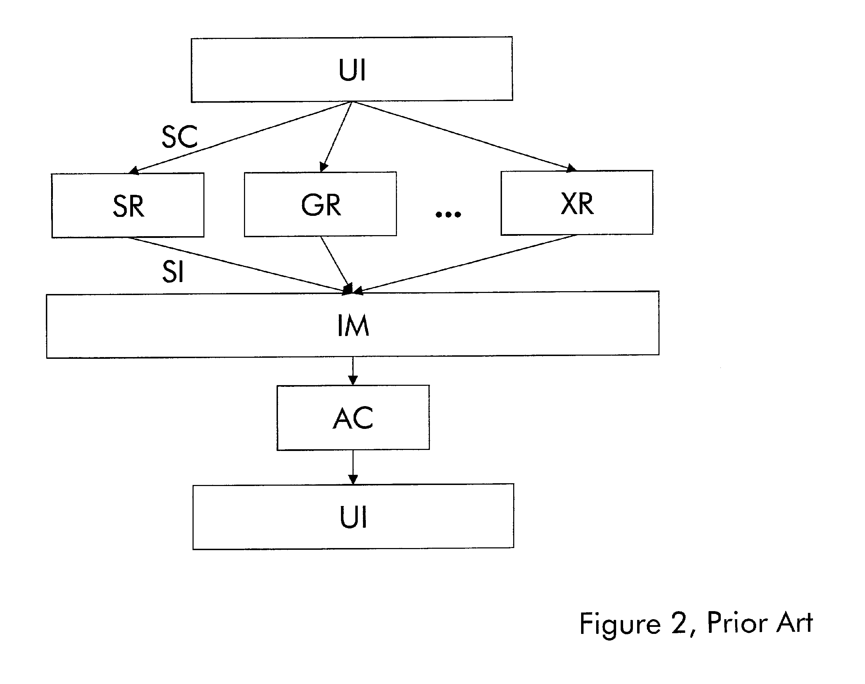

**Figure. 2** shows an architecture of a multimodal application, where the application comprising the following components: a user interface UI, multiple recognizer like a speech recognizer SR, a gesture recognizer GR, and some other recognizer XR, an interaction manager IM and an application component AC.

The figure further shows the information flow between these components. A user is enabled by the user interface UI to input several modalities, e.g. speech and context SC, and these modalities are recognized by components like a speech recognizer SR, a gesture recognizer GR, and some other recognizer XR. Their results, e.g. the speech interpretation Sl, is fed into the interaction manager IM that further processes the results of the recognition components, e.g. by an interpretation and interaction component. The result of the interaction manager IM goes to the application component AC carrying the application logic, and the application component AC instructs the user interface UI providing information to the user and closing an interaction loop.

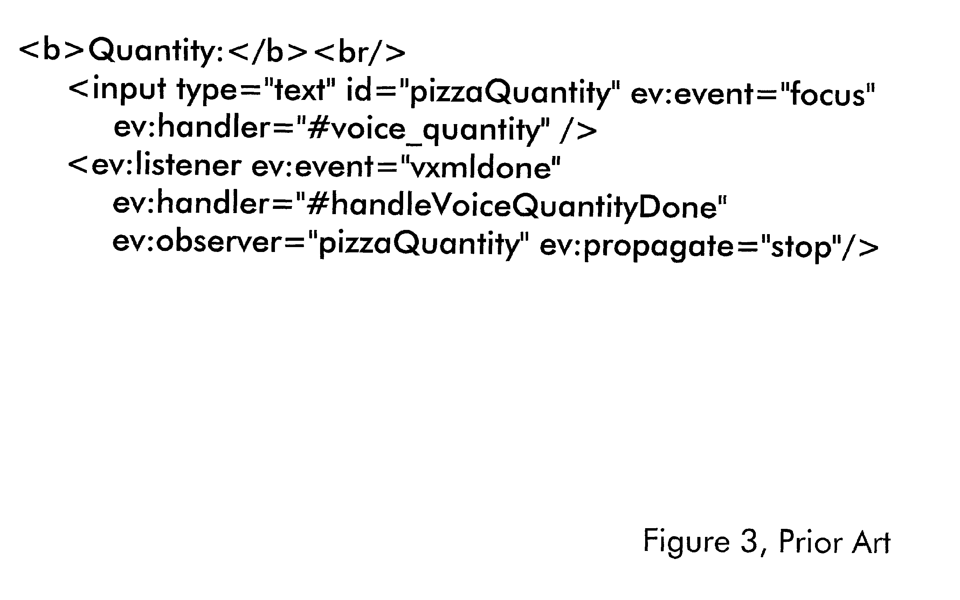

**Figure. 3** shows a VoiceXML code fragment of the application shown in Figure 1.

Standards-compliant combinations of existing languages could be used to create a multimodal application by adding snippets of speech markup to elements of extensible HyperText Markup Language (XHTML) compliant visual markup. The voice portion of these multimodal Web pages might use VoiceXML, which provides a way to manage a voice dialog between a user and a speech recognition engine. The combination of these two languages adds voice to visual markup languages and makes multimodal Web applications easier to develop. These two languages are linked together using XML events to trigger elements of voice interaction.

The XHTML is an extensible Markup Language (XML) based markup language for creating visual applications that users can access from their desktops or wireless devices. XHTML is the next generation of HyperText Markup Language HTML 4.01 in XML, meaning the XHTML markup language can create pages that can be read by all XML-enabled telecommunication devices.

XHTML has replaced HTML as the supported language by the W3C, so future-proofed Web pages using XHTML for not only supporting multimodal applications, and ensuring that all types of telecommunication devices will be able to access these pages correctly. These XHTML-compliant pages will remain the visual portion of the application, and at points of interaction like voice input VoiceXML fragments will be added.

VoiceXML is an XML-based markup language for creating distributed voice applications. VoiceXML can be used to present information to and retrieve information from the user with an audio interface, much as HTML can be used to perform these tasks with a visual interface.

VoiceXML support dialog-based applications that support spoken input (speech recognition), DTMF (telephone key-press) input, synthesized speech output (TTS), and playback and recording of digitized audio. The VoiceXML applications can interact with existing back-end data and logic.

A browser with multimodal extensions might comprise therefore speech recognition and text-to-speech technology, allowing to view and interact with multimodal applications built using XHTML and VoiceXML.

The visual and voice components are linked together using the XML events handler. The important components that provide the link are the "event,", "handler", and "listener", as shown in the figure 3. In the shown code snippet, the event is set to handle "focus", which means the handler will be executed when the cursor enters, or gives focus to, the "pizzaQuantity" field. The handler ties the event in the specified "ID" (in this case, the VoiceXML <form> element), to this HTML element. The "ID" added in the VoiceXML form is the identifier for the handler name. The event handler allows freely name all fields and VoiceXML code, as well as re-use handlers with several HTML controls. The listener waits for the specified event "vxmldone" on the attribute specified by the observer "pizzaQuantity".

Once the event happens, it executes the handler "#handleVoiceQuantityDone".

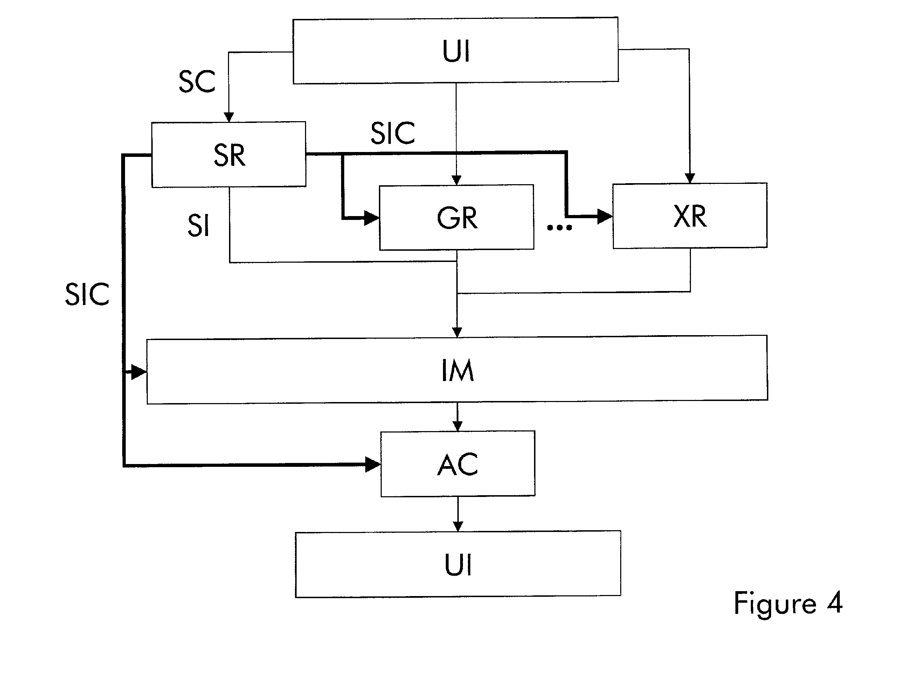

**Figure. 4** shows an architecture of a multimodal application according to the invention. The architecture of a multimodal application comprising the same components as the one shown in Figure 2, i.e. a user interface UI, multiple recognizer like a speech recognizer SR, a gesture recognizer GR, and some other recognizer XR, an interaction manager IM and an application component AC.

Now there are additional information flows originated by the speech recognizer SR. Since the speech recognizer SR is enabled to control the application environment while recognizing speech information a speech interaction control flows SIC from the speech recognizer SR to the other recognizers SR and XR, as well as to the application component AC and the interaction manager IM are newly introduced.

The speech recognizer is enabled controlling the multimodal environment while recognizing by introducing markup language extension comprises tags comprising a symbol- or meta-symbol-attributed natural-language-understanding description for internal controlling of the voice recognizer, where the attributes comprising descriptions controlling the behavior of the (outside) multimodal application.

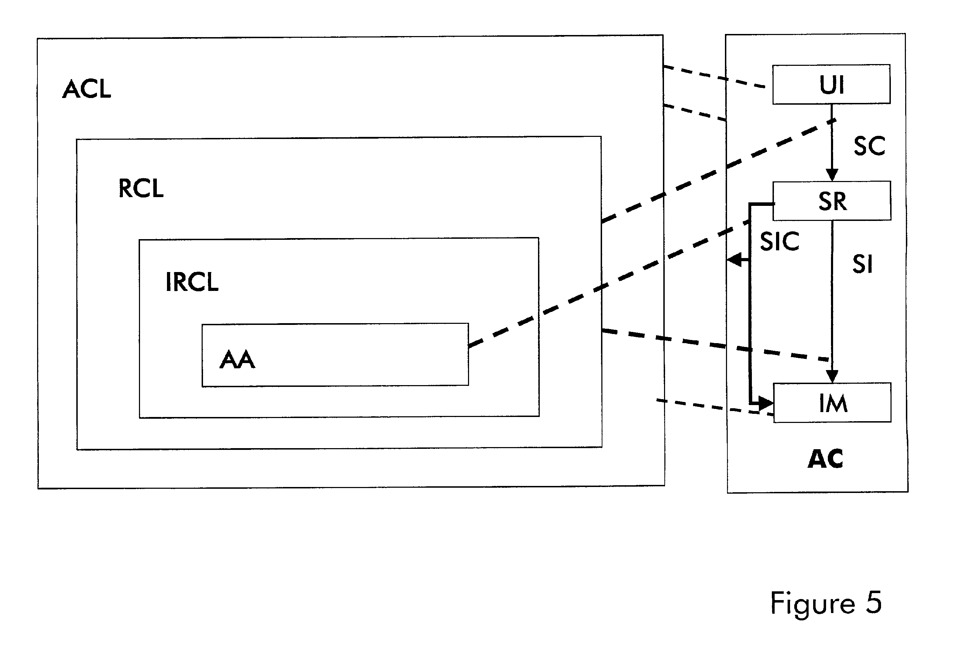

**Figure. 5** shows the part-whole relationship between application specifying markup languages. At the left-hand side of the figure the description languages are shown by boxes. The largest box represents the application control language ACL for implementing view components and control components, e.g. XHTML. A next box represents a recognizer control language RCL for external controlling a speech recognizer, e.g. VoiceXML. This next box comprises an inner box representing the language for internal controlling a speech recognizer IRCL, e.g. a grammar. And this inner box comprising language portions AA, i.e. symbol- or meta-symbol-attributed natural-language-understanding descriptions for internal controlling of the voice recognizer, where the attributes comprising descriptions controlling the behavior of the (outside) multimodal application, e.g. attributes comprising commands forcing actions.

The right hand side of the figure shows the user interface component UI, the speech recognizer SR, and the interaction manager IM, as well as the application control AC and the information flows between these components. The speech and context flow SC and the speech interpretation flow SI is associated to the recognizer control language RCL. The speech interaction control SIC is associated to the language portions AA of the language for internal controlling IRCL.

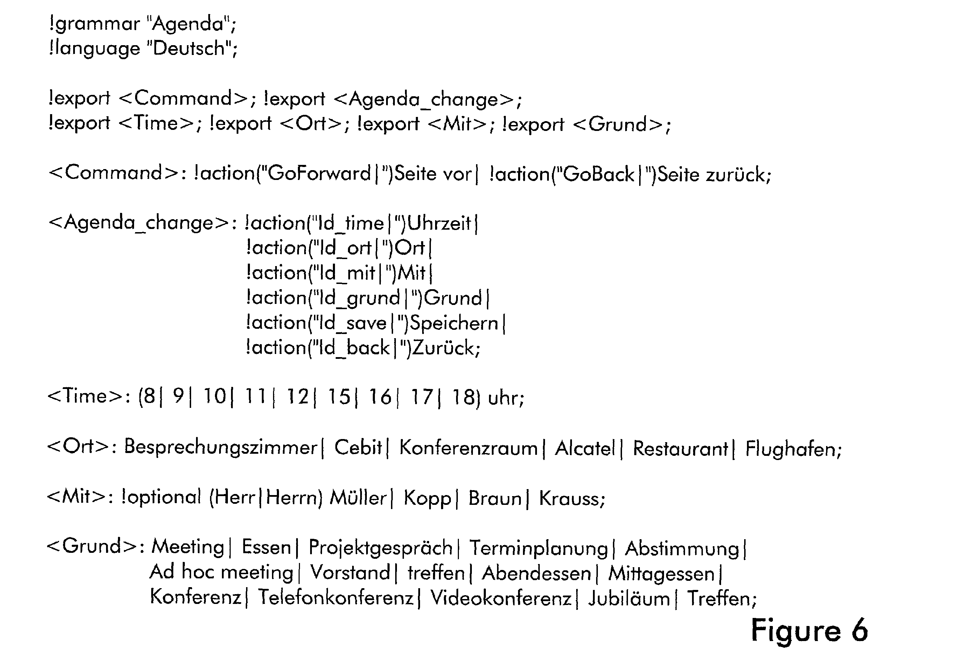

**Figure. 6** is a code fragment of the markup language extension according to the invention.

Most speech recognizer allow the definition of a context free grammar of connected words that can be defined and loaded dynamically at runtime. The grammar is defined in a specific format which is referred as Backus-Naur-Form (BNF). Beside the natural language specification, the BNF contains attributes comprising descriptions controlling the behavior of the (outside) multimodal application, e.g. actions, which will be used while the speech recognition process.

The shown BNF contains three reserved words: "grammar", "language", and "export" beginning with an exclamation mark followed by an expression and terminated with semicolon.

The keyword "language" defines the language of the current vocabulary. It must correspond to a language available in the speech recognition engine. The keyword "export" is used to define results grouped thematically.

In a standard voice driven multimodal application it is possible to integrate a component which exactly evaluates the recognition result. Additional flexibility is introduced by dynamic grammars with semantic primitives being integrated into the grammar files, output by the speech recognizer and interpreted by the multimodal browser. Such semantic primitives specify an operation that the multimodal browser should perform when the respective specified words or phrases have been recognized. As a default operation the recognition result is filled into the active field of an enveloping HTML document.

The recognizer returns the semantic information as part of the recognition result string in a standard text format. Therefore it is necessary to distinguish the semantic information by a special format:
ID[a,b]

The delimiter "|" is used to differ between result text and semantic information. "ID" is the identifier of the destination element in the enveloping hypertext description. Parameter "b" extends the information of the command together with the checkbox it specifies the logical value, for the filling command it specifies the number of words to fill. Parameter "a" defines the action that should be performed.

For example in order to simulate mouse click events by speech the dialog element in the enveloping hypertext description which should become active (selected by simulated mouse-click) have to have an attribute "Id" and the attribute "onclick" set to "this.focus()". For this dialog element an entry in the BNF file must be specified. In the shown BNF file a !action is defined by

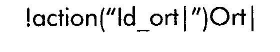

The enveloping hypertext description defines an input dialog element called Firma on which the focus should be set

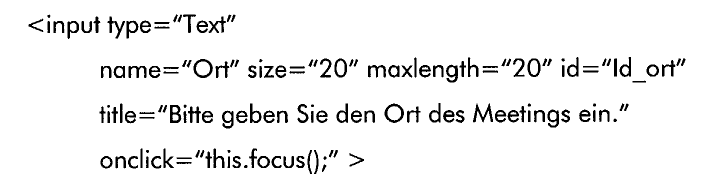

When user speaks the Ort, which is one of the words "Besprechungszimmer", "Cebit", "Konferenzraum", "Alcatel", "Restaurant", "Flughafen", a mouse-click on the input dialog element is performed. As result the focus will be set to this input field.
This command could be used to select an item of a select box, select a radio button, follow a link, or imitate a click to a button.

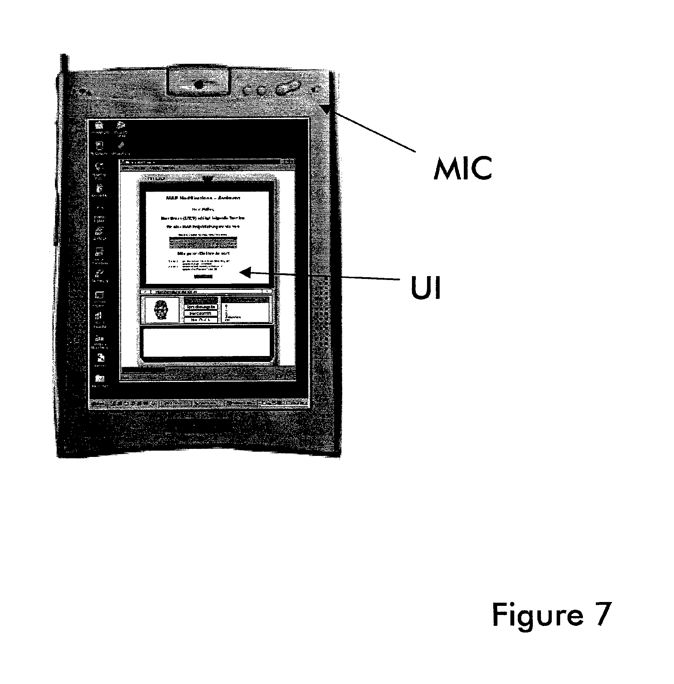

**Figure. 7** shows a portable telecommunication device with a user interface UI comprising for speech input a microphone MIC, and further means for multiple input and output modalities. In order to standardize the device and the software platform it is preferred to run a browser on such a device, increasing hardware and software independence and providing functional interaction interfaces according to a well established user metaphor. Such browser might be a standard browser, e.g. Netscape comprising a plug-in for understanding the markup language extensions for natural language voice processing with a natural-language-understanding description comprising a symbol- or meta-symbol-attributed natural-language-understanding description for internal controlling, where the attributes comprising descriptions for controlling the behavior of browser behavior.

## Claims

1. A computer software product for a multimodal application comprising natural language voice recognition, where a markup language is used to integrate a voice application and where a markup language extension is used for external controlling of a voice recognizer, **characterized in that** the markup language extension comprises tags comprising a symbol- or meta-symbol-attributed natural-language-understanding description for internal controlling of the voice recognizer, where the attributes comprising descriptions controlling the behavior of the (outside) multimodal application.

2. A markup language extension adapted for natural language voice processing in a multimodal application comprising tags comprising a grammar format natural-language-understanding description for controlling a speech recognizer, **characterized in that** the grammar format comprising a symbol- or meta-symbol-attributed natural-language-understanding description for internal controlling of the voice recognizer, where the attributes comprising descriptions controlling the behavior of the (outside) multimodal application.

3. An application interaction system adapted for natural language voice processing in a multimodal application, said application interaction system comprising control means for interpreting an application specified in a markup language, where a voice application is specified in a markup language extension comprising tags for external controlling of a voice recognizer, said voice recognizer comprising recognizer control means, **characterized in that** said recognizer control means are adapted to interpret the markup language extension comprising tags comprising a symbol- or meta-symbol-attributed natural-language-understanding description for internal controlling of the voice recognizer, where the attributes comprising descriptions for controlling the behavior of the (outside) multimodal application.

4. A browser software adapted to interpret a markup language extension adapted for natural language voice processing in a multimodal application comprising tags comprising a grammar format natural-language-understanding description controlling a speech recognizer, **characterized in that** the grammar format comprising a symbol- or meta-symbol-attributed natural-language-understanding description for internal controlling of the voice recognizer, where the attributes comprising descriptions for controlling the behavior of the (outside) multimodal application.

5. A multimodal application comprising natural language voice recognition, said multimodal application comprising interpretation means for interpreting an markup language, said application is specified in said markup language, where a voice application is specified in a markup language extension comprising tags for external controlling of a voice recognizer, **characterized in that** the markup language extension comprising tags comprising a symbol- or meta-symbol-attributed natural-language-understanding description for internal controlling of the voice recognizer, where the attributes comprising descriptions for controlling the behavior of the (outside) multimodal application.

6. A telecommunication device comprising a user interface for natural language, comprising a speech recognizer, and comprising interpretation means adapted to interpret a markup language extension adapted for natural language voice processing in a multimodal application comprising tags comprising a grammar format natural-language-understanding description controlling said speech recognizer, **characterized in that** the grammar format comprising a symbol- or meta-symbol-attributed natural-language-understanding description for internal controlling of the voice recognizer, where the attributes comprising descriptions controlling the behavior of the (outside) multimodal application.
